# EUROPEAN PATENT SPECIFICATION

(11) **EP 1 947 800 B1**
(45) Date of publication and mention of the grant of the patent: **18.11.2009**
(21) Application number: 07123753.1
(22) Date of filing: 20.12.2007
(51) Int. Cl.: H04L 12/18, H04L 12/66, H04L 12/28, H04L 29/06

(54) **Broadcast of service information to user equipments connected to a PSTN, using NGN infrastructure**
Rundfunk von Dienstinformation an Benutzergeräte, die an ein PSTN angeschlossen sind, mit Hilfe einer NGN-Infrastruktur
Diffusion d'information de service vers des équipements utilisateurs connectés à un PSTN, utilisant une infrastructure NGN

(30) Priority: 19.01.2007 IN CH01382007
(43) Date of publication of application: 23.07.2008
(73) Proprietor: Alcatel Lucent, 75008 Paris (FR)
(72) Inventor: Gupta, Rishikesh, 32, Delhi (IN); Ranjan, Rajeev, 224001, Utter Pradesh (IN)
(74) Representative: Chaffraix, Sylvain

(56) References cited:
- EP-A- 1 737 189
- WO-A-01/05127
- US-A1- 2003 161 296

## Description

The present invention relates to transmission of information to user communication equipments which are connected to a fixed communication network of the PSTN (Public Switched Telephone Network) type.

In some circumstances, it may be very important, or simply convenient, to transmit a same service information from a fixed (communication) network, such as a PSTN, or a Next Generation Network (or NGN), to a group of user (communication) equipments. This is notably the case when the information services are ALarm services (or ALS - used in emergency situations such as alerts, national disasters and plan of actions) or Wakeup & Information Services (or WISs - used in non-emergency situations such as advertising, premium information and training notifications).

As it is known by the man skilled in the art, this "mass calling", which is a kind of "broadcasting", cannot be carried out in fixed networks of the old generation such as PSTNs, or in Next Generation Networks (or NGNs), while there are some delivery platforms of the next generation type (also called "INtelligent (IN) platforms"), such as Alcatel 8690 Open Services Platform (OSP), which are capable of delivering WIS and ALS.

Such a delivery platform is also described in document US-A1-2003/161296.

This is mainly due to the fact that the Telekom INAP protocol 168 TR 78.96, used between the fixed line switches of the PSTN and an IN platform, does not support the Initiate Call Attempt procedure of the INAP-CS1 (Intelligent Network Application Part - Capability Set 1) standard as defined in the ETS 300 374-1 of September 1994.

So, the object of this invention is to improve the situation, and more precisely to allow broadcasting of service information towards a group of user (communication) equipments connected to a PSTN.

For this purpose, it provides a communication system which comprises a fixed communication network (for instance a PSTN) connected to a NGN network (provided with a media gateway controller (MGC) and a media gateway (MG), and user communication equipments connected to the fixed communication network or the NGN network.

This communication system is characterized in that:
- its NGN network further comprises a media server which is connected to the media gateway controller and arranged for generating information service messages designated by message identifiers, and
- it comprises a service control device which is arranged, when it is triggered with a chosen broadcast identifier corresponding to a group of at least two user communication equipments and to a message identifier, to determine this corresponding group, then to provide the media server with this message identifier and initiate the establishment of communications (or calls) between the media server and each user communication equipment of the determined group in order the information service message which corresponds to the message identifier be selectively transmitted from the media server to each user communication equipment of the determined group, through at least the media gateway controller.

The communication system according to the invention may include additional characteristics considered separately or combined, and notably :
- its service control device may be arranged for reserving communication ports near the media server before initiating the establishment of communications (or calls) between this media server and each user communication equipment of the determined group;
   ➢ its service control device may be arranged to provide the media gateway controller with instructions intended for establishing a communication with each user communication equipment for which a communication port has been reserved near the media server, in order this media gateway controller controls the establishment of these communications;
- its service control device may be arranged to be triggered with a chosen broadcast identifier contained into a broadcast request generated by a requesting communication equipment and transmitted by the fixed communication network;
   ➢ this broadcast request may further contain a communication identifier of the service control device;
   ➢ its service control device may be arranged, when it receives a broadcast request from a requesting communication equipment, for requiring an authorization identifier associated to the broadcast identifier which is contained into the received broadcast request near the requesting communication equipment, and to initiate the establishment of the communications with the user communication equipments of the group associated to this broadcast identifier if it receives the authorization identifier which is associated to the previously received broadcast identifier from the requesting communication equipment;
      - its service control device may be arranged, when it receives an authorization identifier which is the one associated to the previously received broadcast identifier, for ordering the release of the call established with the requesting communication equipment for the broadcast request and the authorization identifier transmissions;
- its service control device may comprise timers which can be respectively associated to chosen broadcast identifiers intended for triggering this service control device at at least one chosen triggering instant and which are each arranged for triggering the service control device with their associated broadcast identifier each time a corresponding triggering instant is reach;
- if a triggering broadcast identifier corresponds to an information service message requiring an acknowledgement by a chosen confirmation identifier, and if the system does not receive this confirmation identifier from a user communication equipment within a chosen time interval associated to this triggering broadcast identifier, then the communication with this user communication equipment can be released, and a new communication will be established at least one more time with this user communication equipment when a chosen time delay associated to the triggering broadcast identifier is expired.

The invention also provides a service control device which can be used in a communication system such as the one above introduced.

Other features and advantages of the invention will become apparent on examining the detailed specifications hereafter and the appended drawings, wherein:
- figure 1 schematically illustrates an example of communication system comprising a service control device according to the invention,
- figure 2 is a diagram illustrating the main steps of an example of broadcast initiation according to the invention, and
- figure 3 is a diagram illustrating the main steps of an example of a broadcast call establishment with a SIP user equipment and a message playing according to the invention.

The appended drawings may not only serve to complete the invention, but also to contribute to its definition, if need be.

The invention aims at offering mass call for broadcasting service information to user communication equipments connected to a fixed communication network (PSTN) or a NGN network.

In the following description it will be considered that the fixed communication network is a PSTN network interconnected to a NGN Network.

Moreover, in the following description it will be considered that the user communication equipments are fixed telephone or (personal) computer (or laptop) possibly equipped with a user agent for IP communications. But it is important to notice that the invention is not limited to this type of fixed communication equipment. Indeed, it concerns any communicating device having voice receiver and transmitter supported appropriately by the network.

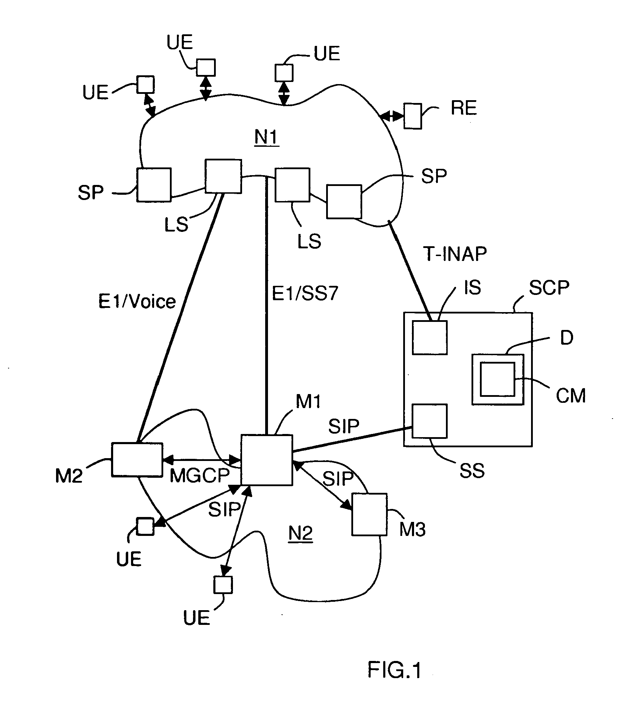

As schematically illustrated in figure 1, a communication system according to the invention comprises at least a PSTN network N1, a NGN network N2, user (communication) equipments UE connected either to the PSTN network N1 or to the NGN network N2, and a service control device D.

The PSTN network N1 comprises several classical line switches LS, also called Service Switching Points (SSPs), which are arranged for establishing connections between user equipments UE (such as fixed telephones), and several classical Specialized Resource Points (or SRPs) SP, which are arranged for providing announcements to the subscribers (users) of the non-NGN networks (here the PSTN network N1).

The NGN network N2 comprises at least a classical media gateway controller (or MGC or else Soft switch) M1 connected to the PSTN network N1 through E1/SS7 links and coupled to IP user equipments UE comprising a user agent, a classical media gateway (or MG) M2 connected to the media gateway controller M1 through Megaco (Media Gateway Control Protocol or H.248) links and to the Service Switching Points LS through E1/Voice links, and a media server (or MS) M3 connected to the media gateway controller M1 through SIP links.

As illustrated in figure 1, the service control device D according to the invention is preferably located into an intelligent network equipment such as a SCP (Service Control Point), which is a delivery platform of the next generation type (such as Alcatel 8690 Open Services Platform (OSP)), capable of delivering value added services like Alarm Services (or ALS), Wakeup & Information Services (or WIS), Flexible Routing and Charging (or FRC), MoVe Service (or MVS), Call Screening Service (or CSS), Least Cost Routing (or LCR), and Audio Conference Service (or ACS), and any other service usually offered by an Intelligent Network Platform and define by the standards.

It is recalled that a WIS may possibly require a confirmation of reception of a transmitted service information message from called user equipment UE, while an ALS generally requires a mandatory confirmation of reception of a transmitted service information message from called user equipment UE.

Such an intelligent network equipment SCP is part of an Intelligent Network (IN) platform. It is classically connected to the PSTN network N1 through a Telekom INAP (T-INAP) link (and therefore comprises a T-INAP stack IS) and to the media gateway controller M1 through a SIP (Session Initiation Protocol) link (and therefore comprises a SIP stack SS).

The service control device D comprises a control module CM in charge of provisioning broadcast events and initiating or triggering the broadcast events as provisioned.

The data defining each broadcast event are preferably stored in the service database of the intelligent network equipment SCP and also preferably in another equipment of the IN platform called Service Management Point (or SMP).

Preferably, the part of the service database dedicated to the definition of the broadcast events is populated with four groups of information. A first group comprises broadcast identifier objects which define different broadcast events. The second group comprises broadcast lists (or groups) of (at least two) users which are respectively associated to the broadcast identifiers of the different broadcast identifier objects. The third group comprises user details which are respectively associated to the different users belonging to the broadcast lists (or groups). The fourth group comprises broadcast schedules which are respectively associated to the broadcast identifiers of the different broadcast identifier objects.

Preferably the third group of information is populated in the first place, the first group of information is populated in the second place, the second group of information is populated in the third place, and finally the fourth group of information is populated in the fourth place.

The user details are administrative data of the subscribers that can be serviced in broadcast events (possibly scheduled). For instance, a user detail comprises:
- a user identifier (User ID),
- a user name,
- an SIP URI (Uniform Resource Identifier) in case where the user equipment UE is a VoIP (Voice over IP) equipment (with a user agent),
- a phone number in case where the user equipment UE is connected to a PSTN network N1, and
- possible additional field(s) for additional information.

A broadcast identifier object may, for instance, comprise:
- a field for a broadcast identifier (broadcast ID),
- a field for a possible authorization identifier (or PIN (Personal Identity Number)) for authorization purpose of invoking the associated broadcast ID. This field is irrelevant when the broadcast ID is invoked by the system based on a broadcast schedule,
- a possible field for a global password intended for creating or modifying fields of a broadcast identifier object,
- a field for a message identifier designating a chosen service information message associated to the broadcast ID,
- a possible field dedicated to a number of call repetition (or retry) in case where a called user equipment UE does not confirm the reception of the service information message associated to the broadcast ID,
- a possible field dedicated to a confirmation information (preferably by DTMF and preferably made of a single digit) that a called user equipment UE has to transmit to the SCP when it receives the service information message associated to the broadcast ID. In case where the confirmation information is not received from the user equipment UE, a new call may be possibly established with this user equipment UE after a chosen retry delay,
- a possible field for indicating whether a confirmation of reception is mandatory or not,
- a possible field for indicating the duration of the retry delay,
- a possible field for defining the ringing duration of the calls,
- a possible field for defining an initiator identifier.

A broadcast list may, for instance, comprise:
- afield for an associated broadcast ID,
- a field for gathering the user identifiers (User ID) of the users that must be associated to a broadcast ID and to which must be transmitted the service information message associated to the broadcast ID.

Preferably a user identifier cannot be used more than one time in the broadcast list (or group). But, a user identifier may be used in several broadcast lists.

A broadcast schedule is intended for creating a schedule for a broadcast event corresponding to a broadcast identifier (broadcast ID). It may, for instance, comprise:
- a field for defining a schedule identifier (Schedule ID),
- a field for an associated broadcast ID,
- a possible field for defining the date of creation of the schedule, which can be also a reference date,
- a field for defining the hour at which the associated broadcast ID must trigger the service control device D,
- possible fields for defining the periodicity of the scheduling (for instance, "only once", "regular period", "weekly", "monthly"),
- possible fields for defining each day of the week during which the associated broadcast ID must trigger the service control device D.

It is important to notice that a broadcast schedule is irrelevant when the associated broadcast identifier is selected by a requesting user equipment (or initiator) RE through a broadcast request containing this broadcast identifier and possibly the communication identifier (or service access code) of the service control device D.

Moreover, a broadcast event will be preferably done as scheduled in the corresponding broadcast schedule if it is invoked (or selected) by a requesting user equipment (or initiator) RE through a broadcast request a few moment before its scheduled date of triggering.

The control module CM of the service control device D intervenes each time it is triggered with a chosen broadcast identifier (Broadcast ID). In this case, it has to determine the group (or list) of users which corresponds to the triggering broadcast identifier. For this purpose, it accesses to the service database of the intelligent network equipment SCP in order to determine the broadcast list (or group) which comprises a field containing the triggering broadcast identifier.

As mentioned before, the service control device D may be triggered either by a broadcast request, transmitted by a requesting equipment (or initiator) RE connected either to the PSTN network N1 or to the NGN network N2, or by a timer mechanism intended for periodically checking the broadcast schedules stored into the service database in association with broadcast identifiers to determine each scheduled broadcast event that must be performed (or executed) because its scheduled time is just expired.

A broadcast request is preferably transmitted by an initiator RE to the device D through a service switching point LS at Trigger Detection Point 3 ( or TDP-3) (analyzed information of the Originating Basic Call State Model on the service switching point LS as defined for the Intelligent Network Services in the ITU-T standards). TDP-3 is the trigger on the service switching point LS to initiate the mechanism and transfer the call control from this service switching point LS to the IN platform after analyzing the digits dialled by a user via T-INAP (Telekom-INAP) over the SS7 stack.

In case where the service control device D is triggered by a broadcast request, it may order that a dedicated message (requiring transmission of the authorization identifier (or PIN) associated to the triggering broadcast identifier contained into the broadcast request) be transmitted to its initiator RE. If the device D receives the authorization identifier which is associated to the triggering broadcast identifier, the device D preferably orders that another dedicated message (signalling that the broadcast is going to start and inviting the initiator RE to hang up) be transmitted to its initiator RE. The call established between the device D and the initiator RE can be released either by the device D or by the initiator RE.

When the control module CM has determined the list (or group) of user identifiers associated to a triggering broadcast identifier, it determines the message identifier which is associated to this triggering broadcast identifier into the service database. Then it provides the media server M3 of the NGN network N2 with the determined message identifier, through the media gateway controller M1.

This media server M3 comprises preferably a memory in which all the service information messages to be broadcast are stored in correspondence with the associated message identifiers.

Then the control module CM initiates the establishment of communications between this media server M3 and each user equipment UE designated by the determined list (or group) of users, in order the information service message which corresponds to the determined message identifier associated to this list be selectively transmitted from the media server M3 to each of these user equipments UE through at least the media gateway controller M1.

More precisely, if the control module CM determines, into the service database, that a user equipment UE designated by the determined list (or group) of users is associated to a SIP URI (and therefore comprises an user agent and is connected to the NGN network N2), it provides the media gateway controller M1 with this SIP URI (and other instructions), through the SIP stack SS, in order it controls the establishment of a communication between the media server M3 and the concerned user equipment UE, through itself. Now, if the control module CM determines, into the service database, that a user equipment UE designated by the determined list (or group) of users is associated to a phone number (and therefore is connected to the PSTN network N1), it provides the media gateway controller M1 with this phone number (and other instructions), through the SIP stack SS, in order it controls the establishment of a communication between the media server M3 and the concerned user equipment UE, through itself, the media gateway M2, an E1/Voice link, a service switching point LS and the PSTN network N1. In this last case, a communication (or call) can be established between the media server M3 and an user equipment UE if the media gateway controller M1 first informs the PSTN network N1 of this establishment through an E1/SS7 (signalling) link.

Preferably, the control module CM of the service control device D selects and reserves communication ports near the media server M3 before initiating the establishment of communications between this media server M3 and the user equipments UE of a determined list (or group), which are connected to the PSTN network N1. So, the number of user equipments UE which can be serviced in parallel depends on the configuration and number of available ports of the media server M3. If there are not enough available ports for all the designated user equipment UE connected to the PSTN network N1, then groups of communications are defined and the communications (or calls) of each group are established sequentially (group after group). For instance, if the media server M3 comprises 120 ports, then a maximum of 120 user equipments UE (connected to the PSTN network N1) can be connected and therefore serviced in parallel before the next "slot" of at most 120 user equipments UE be connected and therefore serviced in parallel in their turn.

This management of the media server ports is done by the device D, because the intelligent network equipment SCP does not comprise a mechanism capable of blocking these ports.

So, when the control module CM has reserved media server ports for some user equipments, it can provide the media gateway controller M1, through the SIP stack SS, not only with the destination information of the concerned user equipments UE (phone number or SIP URI), but also with the addresses of the reserved ports.

When a communication (or call) has been established between the media server M3 and user equipment UE, i.e. as soon as its user lifts its receiver, the media server M3 transmits the service information message (or announcement) to it. Then this message can be played by the loudspeaker of the user equipment UE and/or displayed onto its screen.

If the user must acknowledge receipt of the transmitted service information message, it is informed of this requirement by the latter. For instance the service information message signals the confirmation information that the user has to dial to automatically acknowledge receipt by DTMF (for instance).

If the device D receives the required confirmation information (through (possibly the media gateway M2 and) the media gateway controller M1 and the SIP stack SS) from a user equipment UE, its control module CM orders to the media gateway controller M1 to release the communication (or call) between the media server M3 and this user equipment UE.

If the user does not acknowledge receipt, or if the device D receives an erroneous confirmation information (through (possibly the media gateway M2 and) the media gateway controller M1 and the SIP stack SS) from a user equipment UE, its control module CM orders to the media gateway controller M1 to release the communication (or call) between the media server M3 and connected user equipment UE. Then a retry mode is initiated. It is recalled that the parameters of this retry mode are defined into the broadcast identifier object which is dedicated to the broadcast identifier corresponding to the transmitted service information message. Each time the chosen retry delay is expired, the control module CM orders to the media gateway controller M1 to establish a new communication between the media server M3 and the concerned user equipment UE in order to try to transmit again the corresponding information service message to its user. The number of successive retries is one of the parameters of the retry mode. So when this number is reached the retry mode is finished.

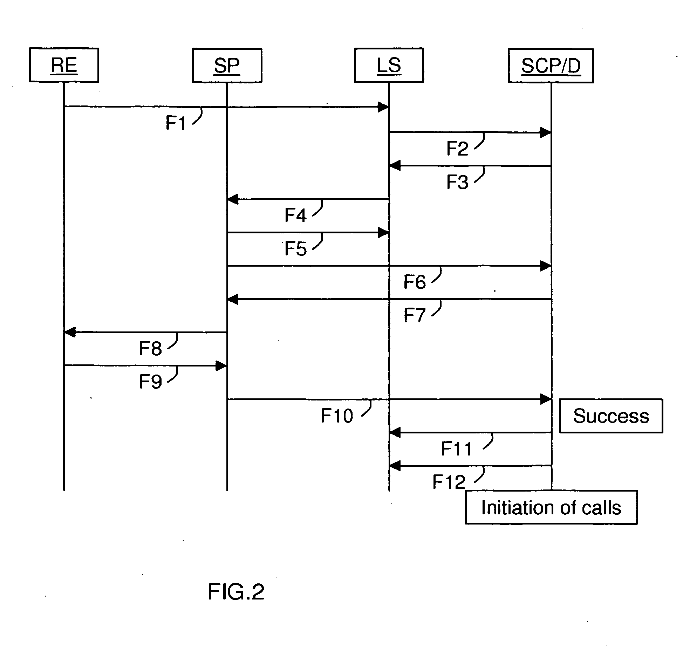

It is now referred to the diagram of figure 2 to describe the main steps of an example of broadcast initiation according to the invention.

In a step F1 an initiator RE (connected to the PSTN network N1) transmits a broadcast request (containing the service access code of the device D and a broadcast identifier) to a service switching point LS.

In a step F2 the service switching point LS transmits a message to the device D to require establishment of a temporary connection and to transmit the received broadcast identifier. This message can be, for instance, of the IDP (Initial Detection Point) type.

In a step F3 the device D responds to the IDP message by transmitting a message authorizing the temporary connection to the service switching point LS. This message can be, for instance, of the ETC (Establish Temporary Connection) type.

In a step F4 the service switching point LS transmits a message to a specialized resource point SP. This message can be, for instance, of the IAM (Initial Address Message) type. This message can also be, for instance, of the ETC (Establish Temporary Connection) type for playing announcement(s) to the initiator RE.

In a step F5 the specialized resource point SP responds to the IAM message by transmitting a message intended for completing the address of the Specialized Resource Point SP to the service switching point LS. This message can be, for instance, of the ACM, ANM (Address Complete Message, ANswer Message) type.

In a step F6 the specialized resource point SP transmits a message to the device D to get some more instructions. This message can be, for instance, of the ARI (Assist Request Instruction) type.

In a step F7 the device D responds to the ARI message by transmitting a message requiring the initiator authorization identifier (or PIN) to the specialized resource point SP. This message can be, for instance, of the PACUI (Prompt And Collect User Information) type. It is important to notice that in some cases the authorization identifier is not required, so that this step F7 and the three following steps F8 to F10 are not implemented.

In a step F8 the specialized resource point SP transmits a message to the initiator RE to get its authorization identifier (or PIN). For instance, this message contains the message "Enter your 4 digit PIN".

In a step F9 the initiator RE transmits its authorization identifier (or PIN) to the specialized resource point SP.

In a step F10 the specialized resource point SP responds to the previously received PACUI message by transmitting a response PACUI message to the device D to provide it with the initiator authorization identifier (or PIN).

When the control module CM receives the initiator authorization identifier (or PIN), it checks into the service database if it corresponds to the one associated to the previously received broadcast identifier (F2). In case of identity, the control module CM considers that the authorization procedure has succeed.

So, in a step F11 the device D transmits a message to the service switching point LS to inform it that it will have to release the temporary connection. This message can be, for instance, of the DFC (Disconnect Forward Connection) type.

And finally in a step 12 the device D transmits a message to the service switching point LS to order it to release the temporary connection.

At this stage, the device D is ready to initiate the establishment of communications to broadcast the service information message, associated to the triggering broadcast identifier, to the user equipments UE that are designated by the broadcast list (or group) associated to the broadcast identifier.

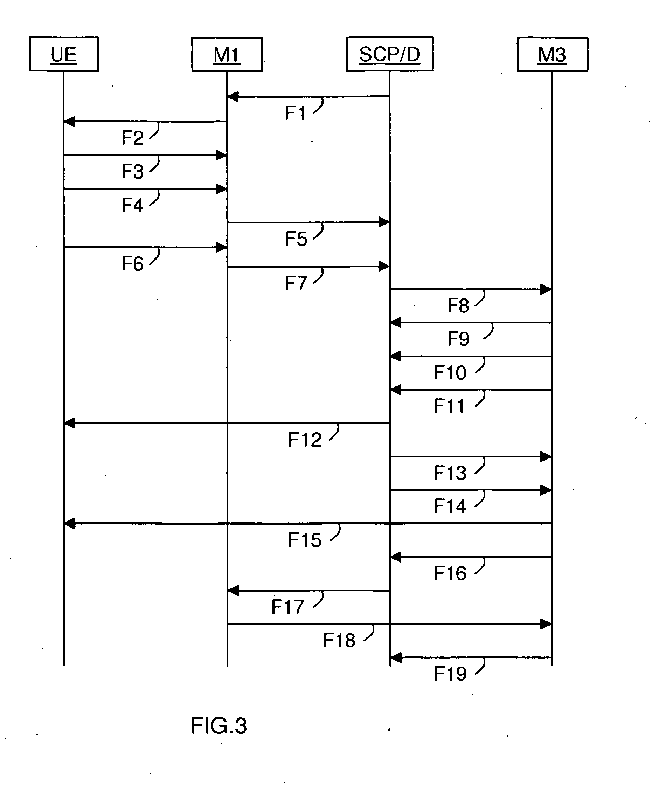

It is now referred to the diagram of figure 3 to describe the main steps of an example of broadcast call establishment with a SIP user equipment and message playing according to the invention.

In a step F1 the device D transmits a SIP INVITE message to the media gateway controller M1 to transmit it the SIP URI of the SIP user equipment UE and to inform it that it will have to establish a communication between the media server M3 and this SIP user equipment UE. This message can be, for instance, of the INVITE without SDP (Session Description Protocol) type.

In a step F2 the media gateway controller M1 transmits a SIP INVITE message to the SIP user equipment UE to ask it to establish a communication with it. This message can be, for instance, of the INVITE without SDP type.

In steps F3 and F4 the SIP user equipment UE responds to the INVITE message by transmitting, to the media gateway controller M1, respectively a 100 Trying message (to establish the required communication with the media gateway controller M1) and a 180 Ringing message (when the SIP user equipment UE starts ringing M1).

In a step F5 the media gateway controller M1 transmits a 180 Ringing message to the device D, after having received the 180 Ringing message from the SIP user equipment UE.

In a step F6 when the SIP user equipment UE answers, it transmits a 200 OK message with its SDP to the media gateway controller M1.

In a step F7 the media gateway controller M1 transmits a 200 OK message with the SDP of the SIP user equipment UE to the device D, after having received the 200 OK message from the SIP user equipment UE.

In a step F8 the device D transmits a SIP INVITE message with the SDP of the SIP user equipment UE to the media server M3.

In steps F9, F10 and F11 the media server M3 responds to the received INVITE message by transmitting respectively a 100 Trying message, a 180 Ringing message and a 200 OK message with its SDP to the device D, to establish the communication with the SIP user equipment UE.

In a step F12 the device D transmits an acknowledge (ACK) message with the SDP of the media server M3 to the SIP user equipment.

In a step F13 the device D transmits an acknowledge (ACK) message to the media server M3 to signal that it has transmitted its SDP and that the communication is established between it and the SIP user equipment UE.

In a step F14 the device D transmits a SIP INFO message to the media server M3 to transmit it the message identifier associated to the previously received broadcast identifier. Then the media server M3 determines the service information message (or announcement), which corresponds to this message identifier.

In a step F15 the media server M3 transmits the determined service information message (or announcement) to the SIP user equipment UE through the newly established communication. Then the determined service information message (or announcement) can be played by the loudspeaker of the SIP user equipment UE and/or displayed onto its screen.

In a step F16 the media server M3 transmits a 200 OK message to the device D to signal that it has transmitted the service information message to the SIP user equipment UE.

In a step F17 the device D transmits a BYE message to the media gateway controller M1 to order it to release the communication established between the media server M3 and the SIP user equipment UE.

In a step F18 the media gateway controller M1 transmits a BYE message to the media server M3 to inform it that it will release the communication established with the SIP user equipment UE. Then the media gateway controller M1 releases the communication.

In a step F19 the media server M3 transmits a 200 OK message to the device D to signal that the communication has been released.

It is important to notice that the above described example relates to a service information message which does not require that the user of the SIP user equipment UE acknowledges receipt of it. When such an acknowledgement is required, at least one additional step occurred between F16 and F17 steps to allow the SIP user equipment UE to transmit the required confirmation information to the device D.

The device D according to the invention is preferably implemented as software modules. But it may be also implemented as software modules or as a combination of hardware and software modules.

The invention is not limited to the embodiments of service control device D, intelligent network equipment SCP and communication system described above, only as examples, but it encompasses all alternative embodiments which may be considered by one skilled in the art within the scope of the claims hereafter.

## Claims

1. Communication system, comprising a fixed communication network (N1) connected to a Next Generation Network (N2) provided with a media gateway controller (M1) and a media gateway (M2), and user communication equipments (UE) connected to said fixed communication network (N1) or Next Generation Network (N2), **characterized in that** said Next Generation Network (N2) further comprises a media server (M3) connected to said media gateway controller (M1) and arranged for generating information service messages designated by message identifiers, and **in that** it comprises a service control device (D) arranged, when it is triggered with a chosen broadcast identifier corresponding to a group of at least two user communication equipments (UE) and to a message identifier, to determined said corresponding group, then to provide said media server (M3) with said message identifier and initiate the establishment of communications between said media server (M3) and each user communication equipment (UE) of said determined group such that the information service message corresponding to said message identifier be selectively transmitted from said media server (M3) to each user communication equipment (UE) of said determined group through at least said media gateway controller (M1).

2. Communication system according to claims 1, **characterized in that** said service control device (D) is arranged for reserving communication ports near said media server (M3) before initiating the establishment of communications between said media server (M3) and each user communication equipment (UE) of said determined group.

3. Communication system according to claim, 2, **characterized in that** said service control device (D) is arranged to provide said media gateway controller (M1) with instructions for establishing said communications with each user communication equipment (UE) for which a communication port has been reserved near said media server (M3) in order said media gateway controller (M1) controls the establishment of said communications.

4. Communication system according to one of claims 1 to 3, **characterized in that** said service control device (D) is arranged to be triggered with a chosen broadcast identifier contained into a broadcast request generated by a requesting communication equipment and transmitted by said fixed communication network (N1).

5. Communication system according to claim 4, **characterized in that** said broadcast request further contains a communication identifier of said service control device (D).

6. Communication system according to one of claims 4 and 5, **characterized in that** said service control device (D) is arranged, when it receives a broadcast request from a requesting communication equipment, for requiring an authorization identifier associated to the broadcast identifier contained into the received broadcast request near said requesting communication equipment, and to initiate the establishment of the communications with the user communication equipments (UE) of the group associated to said broadcast identifier if it receives the authorization identifier which is associated to the previously received broadcast identifier from said requesting communication equipment.

7. Communication system according to claim 6, **characterized in that** said service control device (D) is arranged, when it receives an authorization identifier which is the one associated to the previously received broadcast identifier, for ordering the release of the call established with said requesting communication equipment for the broadcast request and the authorization identifier transmissions.

8. Communication system according to one of claims 1 to 7, **characterized in that** said service control device (D) comprises timers that can be respectively associated to chosen broadcast identifiers which are intended for triggering said service control device (D) at at least one chosen triggering instant and each arranged for triggering said service control device (D) with its associated broadcast identifier each time a corresponding triggering instant is reach.

9. Communication system according to one of claims 1 to 8, **characterized in that**, if said triggering broadcast identifier, corresponds to an information service message requiring an acknowledgement by a chosen confirmation identifier, and if said system does not receive said confirmation identifier from a user communication equipment (UE) within a chosen time interval associated to said triggering broadcast identifier, then the communication with said user communication equipment (UE) is released, and a new communication is established at least one more time with this user communication equipment (UE) when a chosen time delay associated to said triggering broadcast identifier is expired.

10. Service control device (D) for a communication system comprising a fixed communication network (N₁) connected to a Next Generation Network (N2) provided with a media gateway controller (M1) and a media gateway (M2), and user communication equipments (UE) connected to said fixed communication network (N1) or Next Generation Network (N2), **characterized in that** said service control device comprises a control means (CM) arranged, when it is triggered with a chosen broadcast identifier corresponding to a group of at least two user communication equipments (UE) and to a message identifier, to determine said corresponding group, then to provide a media server (M3) of said Next Generation Network (N2) with said message identifier and initiate the establishment of communications between said media server (M3) and each user communication equipment (UE) of said determined group, such that an information service message corresponding to said message identifier be selectively transmitted from said media server (M3) to each user communication equipment (UE) of said determined group through at least said media gateway controller (M1).

11. Service control device according to claim 10, **characterized in that** said service control device (SC) is arranged for reserving communication ports near said media server (M3) before initiating the establishment of communications between said media server (M3) and each user communication equipment (UE) of said determined group.

12. Service control device according to claims 11, **characterized in that** said control means (CM) is arranged to provide said media gateway controller (M1) with instructions for establishing said communications with each user communication equipment (UE) for which a communication port has been reserved near said media server (M3) in order said media gateway controller (M1) controls the establishment of said communications.

13. Service control device according to one of claims 10 to 12, **characterized in that** said control means (CM) is arranged to be triggered with a chosen broadcast identifier contained into a broadcast request generated by a requesting communication equipment and transmitted by said fixed communication network (N1).

14. Service control device according to claim 13, **characterized in that** said broadcast request further contains a communication identifier of said service control device (D).

15. Service control device according to one of claims 13 and 14, **characterized in that** said control means (CM) is arranged, when it receives a broadcast request from a requesting communication equipment, for requiring an authorization identifier associated to the broadcast identifier contained into the received broadcast request near said requesting communication equipment, and to initiate the establishment of the communications with the user communication equipments (UE) of the group associated to said broadcast identifier if it receives the authorization identifier which is associated to the previously received broadcast identifier from said requesting communication equipment.

16. Service control device according to claim 15, **characterized in that** said control means (CM) is arranged, when it receives an authorization identifier which is the one associated to the previously received broadcast identifier, for ordering the release of the call established with said requesting communication equipment for the broadcast request and the authorization identifier transmissions.

17. Service control device according to one of claims 10 to 16, **characterized in that** said control means (CM) comprises timers that can be respectively associated to chosen broadcast identifiers which are intended for triggering said service control device (D) at at least one chosen triggering instant and each arranged for triggering said service control device (D) with its associated broadcast identifier each time a corresponding triggering instant is reach.

## Patentansprüche

1. Kommunikationssystem, umfassend ein Kommunikationsfestnetz (N1), welches an ein mit einem Mediagateway-Controller (M1) und einem Mediagateway (M2) ausgestattetes Kommunikationsnetz der nächsten Generation (N2) angeschlossen ist, sowie Benutzerkommunikationsgeräte (UE), welche an das besagte Kommunikationsfestnetz (N1) oder das Kommunikationsnetz der nächsten Generation (N2) angeschlossen sind, **dadurch gekennzeichnet, dass** das Kommunikationsnetz der nächsten Generation (N2) weiterhin einen Mediaserver (M3) umfasst, welcher an den besagten Mediagateway-Controller (M1) angeschlossen und dazu ausgelegt ist, von Nachrichtenkennungen designierte Informationsdienstnachrichten zu erzeugen, und dass es eine Dienststeuereinrichtung (D) umfasst, welche dazu ausgelegt ist, bei Triggern mit einer ausgewählten Broadeatst-Kennung, welche einer Gruppe von mindestens zwei Benutzerkommunikationsgeräten (UE) und einer Nachrichtenkennung entspricht, die besagte entsprechende Gruppe zu bestimmen, die besagte Nachrichtenkennung anschließend an den besagten Mediaserver (M3) zu senden und den Aufbau von Verbindungen zwischen dem besagten Mediaserver (M3) und jedem Benutzerkommunikationsgerät (UE) der besagten bestimmten Gruppe zu initiieren, so dass die der besagten Nachrichtenkennung entsprechende Informationsdienstnachricht über mindestens den besagten Mediagateway-Controller (M1) selektiv von dem besagten Mediaserver (M3) an jedes Benutzerkommunikationsgerät (UE) der besagten bestimmten Gruppe übertragen wird.

2. Kommunikationssystem nach Anspruch 1, **dadurch gekennzeichnet, dass** die besagte Dienststeuereinrichtung (D) dazu ausgelegt ist, vor dem Initiieren des Aufbaus von Verbindungen zwischen dem besagten Mediaserver (M3) und jedem Benutzerkommunikationsgerät (UE) der besagten bestimmten Gruppe Kommunikationsports in der Nähe des besagten Mediaservers (M3) zu reservieren.

3. Kommunikationssystem nach Anspruch 2, **dadurch gekennzeichnet, dass** die besagte Dienststeuereinrichtung (D) dazu ausgelegt ist, dem besagten Mediagateway-Controller (M1) Anweisungen für den Aufbau der besagten Verbindungen mit jedem Benutzerkommunikationsgerät (UE), für welches ein Kommunikationsport in der Nähe des besagten Mediaservers (M3) reserviert worden ist, zu liefern, so dass der besagte Mediagateway-Controller (M1) den Aufbau der besagten Verbindungen steuert.

4. Kommunikationssystem nach einem der Ansprüche 1 bis 3, **dadurch gekennzeichnet, dass** die besagte Dienststeuereinrichung (D) dazu ausgelegt ist, mit einer ausgewählten Broadcast-Kennung, welche in einer von einem anfragenden Kommunikationsgerät erzeugten und von dem besagten Kommunikationsfesinetz (N1) übertragenen Broadcast-Anforderung enthalten ist, getriggert zu werden.

5. Kommunikationssystem nach Anspruch 4, **dadurch gekennzeichnet, dass** die besagte Broadcast-Anforderung weiterhin eine Verbindungskennung der besagten Dienststeuereinrichtung (D) umfasst.

6. Kommunikationssystem nach einem der Ansprüche 4 und 5, **dadurch gekennzeichnet, dass** die besagte Dienststeuereinrichtung (D) dazu ausgelegt ist, wenn sie eine Broadcast-Anforderung von einem anfragenden Kommunikationsgerät empfängt, eine mit der Broadcast-Kennung, welche in der empfangenen Broadcast-Anforderung in der Nähe des besagten anfragenden Kommunikationsgeräts enthalten ist, assoziierte Zulassungskennung anzufordern und den Aufbau der Verbindungen mit den Benutzerkommunikationsgeräten (UE) der mit der besagten Broadcast-Kennung assoziierten Gruppe zu initiieren, wenn sie die mit der zuvor von dem besagten anfragenden Kommunikationsgerät empfangenen Broadcast-Kennung assoziierte Zulassungskennung empfängt.

7. Kommunikationssystem nach Anspruch 6, **dadurch gekennzeichnet, dass** die besagte Dienststeuereinrichtung (D) dazu ausgelegt ist, wenn sie eine Zulassungskennung empfängt, welche diejenige ist, die mit der zuvor empfangenen Broadcast-Kennung assoziiert ist, die Freigabe des mit dem anfragenden Kommunikationsgerät aufgebauten Anrufs für die Übertragung der Broadcast-Anforderung und der Zulassungskennung zu befehlen.

8. Kommunikationssystem nach einem der Ansprüche 1 bis 7, **dadurch gekennzeichnet, dass** die besagte Dienssteuereinrichtung (D) Taktgeber umfasst, welche jeweils ausgewählten Broadcast-Kennungen, welche für das Triggern der besagten Dienssteuereinheit (D) zu mindestens einem ausgewählten Triggerzeitpunkt bestimmt sind, zugeordnet werden können und dazu ausgelegt sind, die besagte Dienststeuereinrichtung (D) mit ihrer assoziierten Broadcast-Kennung jedes Mal, wenn ein entsprechender Triggerzeitpunkt erlangt wird, zu triggern.

9. Kommunikationssystem nach einem der Ansprüche 1 bis 8, **dadurch gekennzeichnet, dass**, wenn die besagte Trigger-Broadcast-Kennung einer Informationsdienstnachricht entspricht, welche eine Rückmeldung durch eine ausgewählte Bestätigungskennung erfordert, und wenn das besagte System die besagte Bestätigungskennung nicht von einem Kommunikationsgerät (UE) innerhalb eines mit der besagten Trigger-Broadcast-Kennung assoziierten Zeitintervalls empfängt, die Verbindung mit dem besagten Kommunikationsgerät (UE) freigegeben wird und der Aufbau einer neuen Verbindung mit diesem Benutzerkommunikationsgerät (UE) mindestens einmal wiederholt wird, wenn eine mit der Trigger-Broadcast-Kennung assoziierte ausgewählte Zeitspanne abgelaufen ist.

10. Dienststeuereinrichtung (D) für ein Kommunikationssystem, welches ein Kommunikationsfestnetz (N1), das an ein mit einem Mediagateway-Controller (M1) und einem Mediagateway (M2) ausgestattetes Kommunikationsnetz der nächsten Generation (N2) angeschlossen ist, sowie Benutzerkommunikationsgeräte (UE), welche an das besagte Kommunikationsfestnetz (N1) oder das Kommunikationsnetz der nächsten Generation (N2) angeschlossen sind, umfasst, **dadurch gekennzeichnet, dass** die Dienststeuereinrichtung ein Steuermittel (CM) umfasst, welches dazu ausgelegt ist, bei Triggern mit einer ausgewählten Broadcast-Kennung, welche einer Gruppe von mindestens zwei Benutzerkommunikationsgeräten (UE) und einer Nachrichtenkennung entspricht, die besagte entsprechende Gruppe zu bestimmen, die besagte Nachrichtenkennung anschließend an einen Mediaserver (M3) des besagten Kommunikationsnetzes der nächsten Generation (N2) zu senden und den Aufbau von Verbindungen zwischen dem besagten Mediaserver (M3) und jedem Benutzerkommunikationsgerät (UE) der besagten bestimmten Gruppe zu initiieren, so dass eine der besagten Nachrichtenkennung entsprechende Informationsdienstnachricht über mindestens den besagten Mediagateway-Controller (M1) selektiv von dem besagten Mediaserver (M3) an jedes Benutzerkommunikationsgerät (UE) der besagten bestimmten Gruppe übertragen wird,

11. Dienststeuereinrichtung nach Anspruch 10, **dadurch gekennzeichnet, dass** die besagte Dienststeuereinrichtung (SC) dazu ausgelegt ist, vor dem Initiieren des Aufbaus von Verbindungen zwischen dem besagten Mediaserver (M3) und jedem Benutzerkommunikationsgerät (UE) der besagten bestimmten Gruppe Kommunikationsports in der Nähe des besagten Mediaservers (M3) zu reservieren.

12. Dienststeuereinrichtung nach Anspruch 11, **dadurch gekennzeichnet, dass** das besagte Steuermittel (CM) dazu ausgelegt ist, dem besagten Mediagateway-Gontroller (M1) Anweisungen für den Aufbau der besagten Verbindungen mit jedem Benutzerkommunikationsgerät (UE), für welches ein Kommunikationsport in der Nähe des besagten Mediaservers (M3) reserviert worden ist, zu liefern, damit der besagte Mediagateway-Controller (M1) den Aufbau der besagten Verbindungen steuert.

13. Dienststeuereinrichtung nach einem der Ansprüche 10 bis 12, **dadurch gekennzeichnet, dass** das besagte Steuermittel (CM) dazu ausgelegt ist, mit einer ausgewählten Broadcast-Kennung, welche in einer von einem anfragenden Kommunikationsgerät erzeugten und von dem besagten Kommunikationsfestnetz (N1) übertragenen Broadcast-Anforderung enthalten ist, getriggert zu werden.

14. Dienststeuereinrichtung nach Anspruch 13, **dadurch gekennzeichnet, dass** die besagte Broadcast-Anforderung weiterhin eine Verbindungskennung der besagten Dienststeuereinrichtung (D) umfasst.

15. Dienststeuereinrichtung nach einem der Ansprüche 13 und 14, **dadurch gekennzeichnet, dass** das besagte Steuermittel (CM) dazu ausgelegt ist, wenn es eine Broadcast-Anforderung von einem anfragenden Kommunikationsgerät empfängt, eine mit der Broadcast-Kennung, welche in der empfangenen Broadcast-Anforderung in der Nähe des besagten anfragenden Kommunikationsgeräts enthalten ist, assoziierte Zulassungskennung anzufordern und den Aufbau der Verbindungen mit den Benutzerkommunikationsgeräten (UE) der mit der besagten Broadcast-Kennung assoziierten Gruppe zu initiieren, wenn es die mit der zuvor von dem besagten aufragenden Kommunikationsgerät empfangenen Broadcast-Kennung assoziierte Zulassungskennung empfängt.

16. Dienststeuereinrichtung nach Anspruch 15, **dadurch gekennzeichnet, dass** das besagte Steuermittel (CM) dazu ausgelegt ist, wenn es eine Zulassungskennung empfängt, welche diejenige ist, die mit der zuvor empfangenen Broadcast-Kennung assoziiert ist, die Freigabe des mit dem anfragenden Kommunikationsgerät aufgebauten Anrufs für die Übertragung der Broadcast-Anforderung und der Zulassungskennung zu befehlen.

17. Dienststeuereinrichtung nach einem der Anspruche 10 bis 16, **dadurch gekennzeichnet, dass** das besagte Steuermittel (CM) Taktgeber umfasst, welche jeweils ausgewählten Broadcast-Kennungen, welche für das Triggern der besagten Dienssteuereintheit (D) zu mindestens einem ausgewählten Triggerzeitpunkt bestimmt sind, zugeordnet werden können und dazu ausgelegt sind, die besagte Dienststeuereinrichtung (D) mit ihrer assoziierten Broadcast-Kenriung jedes Mal, wenn ein entsprechender Triggerzeitpunkt erlangt wird, zu triggern.

## Revendications

1. Système de communications, comprenant un réseau de communication fixe (N1) connecté à un réseau de nouvelle génération (N2) équipé d'un contrôleur de passerelle de média (M1) et d'une passerelle de média (M2) et des équipements de communication utilisateur (UE) connectés audit réseau de communication fixe (N1) ou audit réseau de nouvelle génération (N2), **caractérisé en ce que** ledit réseau de nouvelle génération (N2) comprend en outre une passerelle multimédia (M3) connectée audit contrôleur de passerelle de média (M1) et agencée pour générer des messages de service d'information désignés par des identifiants de message, et **en ce qu'**il comprend un dispositif de commande de services (D) agencé pour, lorsqu'il est déclenché par un identifiant de diffusion choisi correspondant à un groupe d'au moins deux équipements de communication utilisateur (UE) et à un identifiant de message, déterminer ledit groupe correspondant, puis fournir à ladite passerelle multimédia (M3) ledit identifiant de message et initier l'établissement de communications entre ladite passerelle multimédia (M3) et chaque équipement de communication utilisateur (UE) dudit groupe déterminé de sorte que le message de service d'information correspondant audit identifiant de message soit transmis de manière sélective de ladite passerelle multimédia (M3) à chaque équipement de communication utilisateur (UE) dudit groupe déterminé par l'intermédiaire d'au moins ledit contrôleur de passerelle de média (M1).

2. Système de communications selon la revendication 1, **caractérisé en ce que** ledit dispositif de commande de services (D) est agencé pour réserver les ports de communication proches de ladite passerelle multimédia (M3) avant d'initier l'établissement de communications entre ladite passerelle multimédia (M3) et chaque équipement de communication utilisateur (UE) dudit groupe déterminé.

3. Système de communications selon la revendication 2, **caractérisé en ce que** ledit dispositif de commande de services (D) est agencé pour fournir audit contrôleur de passerelle de média (M1) des instructions pour établir lesdites communications avec chaque équipement de communication utilisateur (UE) pour lequel un port de communication a été réservé près de ladite passerelle multimédia (M3) afin que ledit contrôleur de passerelle de média (M1) contrôle l'établissement desdites communications,

4. Système de communications selon l'une des revendications 1 à 3, **caractérisé en** se que ledit dispositif de commande de services (D) est agencé pour être déclenché par un identifiant de diffusion choisi contenu dans une demande de diffusion générée par un équipement demandant une communication et transmise par ledit réseau de communication fixe (N1),

5. Système de communications selon la revendication 4, **caractérisé en ce que** ladite demande de diffusion contient en outre un identifiant de communication dudit dispositif de commande de services (D).

6. Système de communications selon l'une des revendications 4 et 5, **caractérisé en ce que** ledit dispositif de commande de services (D) est agencé pour, lorsqu'il reçoit une demande de diffusion provenant d'un équipement demandant une communication, demander un identifiant d'autorisation associé à l'identifiant de diffusion contenu dans la demande de diffusion reçue près dudit équipement demandant une communication, et pour initier l'établissement des communications avec les équipements de communication utilisateur (UE) du groupe associé audit identifiant de diffusion s'il reçoit l'identifiant d'autorisation qui est associé à l'identifiant de diffusion reçu préalablement dudit équipement demandant une communication.

7. Système de communications selon la revendications, **caractérisé en ce que** ledit dispositif de commande de services (D) est agencé pour, lorsqu'il reçoit un identifiant d'autorisation qui est celui qui est associé à l'identifiant de diffusion reçu préalablement, ordonner la libération de l'appel établi avec ledit équipement demandant une communication pour la transmission de la demande de diffusion et de l'identifiant d'autorisation.

8. Système de communications selon l'une des revendications 1 à 7, **caractérisé en ce que** ledit dispositif de commande de services (D) comprend des minuteurs qui peuvent être associés respectivement à des identifiants de diffusion choisis qui sont destinés à déclencher ledit dispositif de commande de services (D) à au moins un instant de déclenchement choisi, chacun étant agencé pour déclencher ledit dispositif de commande de services (D) au moyen de son identifiant de diffusion associé chaque fois qu'un instant de déclenchement correspondant est atteint.

9. Système de communications, selon l'une des revendications, 1 à 8, **caractérisé en ce que**, si ledit identifiant de diffusion de déclenchement correspond à un message de service d'information demandant un accusé de réception par un identifiant de confirmation choisi, et si ledit système ne reçoit pas ledit identifiant de confirmation en provenance d'un équipement, de communication utilisateur (UE) dans un intervalle de temps choisi associé audit identifiant de diffusion de déclenchement, alors la communication avec ledit équipement de communication utilisateur (UE) est libérée et une nouvelle communication est établie au moins une fois de plus avec cet équipement de communication utilisateur (UE) lorsqu'un retard temporel choisi associé audit identifiant de diffusion de déclenchement est écoulé.

10. Dispositif de commande de services (D) pour un système de communications comprenant un réseau de communication fixe (N1) connecté à un réseau de nouvelle génération (N2) équipé d'un contrôleur de passerelle de média (M1) et d'une passerelle de média (M2) et des équipements de communication utilisateur (UE) connectés audit réseau de communication fixe (N1) ou audit réseau de nouvelle génération (N2), **caractérisé en ce que** ledit dispositif de commande de services comprend des moyens de commande (CM) agencés pour, lorsqu'ils sont déclenchés par un identifiant de diffusion choisi correspondant à un groupe d'au moins deux équipements de communication utilisateur (UE) et à un identifiant de message, déterminer ledit groupe correspondant, puis fournir à une passerelle multimédia (M3) dudit réseau de nouvelle génération (N2) ledit identifiant de message et initier l'établissement de communications entre ladite passerelle multimédia (M3) et chaque équipement de communication utilisateur (UE) dudit groupe déterminé de sorte qu'un message de service d'information correspondant audit identifiant de message soit transmis de manière sélective de ladite passerelle multimédia (M3) à chaque équipement de communication utilisateur (UE) dudit groupe déterminé par l'intermédiaire d'au moins ledit contrôleur de passerelle de média (M1).

11. Dispositif de commande de services selon la revendication 10, **caractérisé en ce que** ledit dispositif de commande de services (SC) est agencé pour réserver les ports de communication proches de ladite passerelle multimédia (M3) avant d'initier l'établissement de communications entre ladite passerelle multimédia (M3) et chaque équipement de communication utilisateur (UE) dudit groupe déterminé.

12. Dispositif de commande de services selon la revendication 11, **caractérisé en ce que** lesdits moyens de commande (CM) sont agencés pour fournir audit contrôleur de passerelle de média (M1) des instructions pour établir lesdites communications avec chaque équipement de communication utilisateur (UE) pour lequel un port de communication a été réservé près de ladite passerelle multimédia (M3) afin que ledit contrôleur de passerelle de média (M1) contrôle l'établissement desdites communications.

13. Dispositif de commande de services selon l'une des revendications 10 à 12,
**caractérisé en ce que** lesdits moyens de commande (CM) sont agencés pour être déclenchés par un identifiant de diffusion choisi contenu dans une demande de diffusion générée par un équipement demandant une communication et transmise par ledit réseau de communication fixe (N1).

14. Dispositif de commande de services selon la revendication 13, **caractérisé en ce que** ladite demande de diffusion contient en outre un identifiant de communication dudit dispositif de commande de services (D).

15. Dispositif de commande de services selon l'une des revendications 13 et 14, **caractérisé en ce que** lesdits moyens de commande (CM) sont agencés pour, lorsqu'ils reçoivent une demande de diffusion provenant d'un équipement demandant une communication, demander un identifiant d'autorisation associé à l'identifiant de diffusion contenu dans la demande de diffusion reçue près dudit équipement demandant une communication, et pour initier l'établissement des communications avec les équipements de communication utilisateur (UE) du groupe associé audit identifiant de diffusion s'ils reçoivent l'identifiant d'autorisation qui est associé à l'identifiant de diffusion reçu préalablement dudit équipement demandant une communication.

16. Dispositif de commande de services selon la revendication 15, **caractérisé en ce que** lesdits moyens de commande (CM) sont agencés pour, lorsqu'ils reçoivent un identifiant d'autorisation qui est celui qui est associé à l'identifiant de diffusion reçu préalablement, ordonner la libération de l'appel établi avec ledit équipement demandant une communication pour la transmission de la demande de diffusion et de l'identifiant d'autorisation.

17. Dispositif de commande de services selon l'une des revendications 10 à 16, **caractérisé en ce que** lesdits moyens de commande (CM) comprennent des minuteurs qui peuvent être associés respectivement à des identifiants de diffusion choisis qui sont destinés à déclencher ledit dispositif de commande de services (D) à au moins un instant de déclenchement choisi, chacun étant agencé pour déclencher ledit dispositif de commande de services (D) au moyen de son identifiant de diffusion associé chaque fois qu'un instant de déclenchement correspondant est atteint.
